# EUROPÄISCHE PATENTSCHRIFT

(11) **EP 2 136 969 B1**
(45) Veröffentlichungstag und Bekanntmachung des Hinweises auf die Patenterteilung: **04.07.2018**
(21) Anmeldenummer: 08748933.2
(22) Anmeldetag: 16.04.2008
(51) Int. Cl.: F16B 27/00, B25B 23/04

(54) **VORRICHTUNG ZUM VERARBEITEN VON GURTBAND ZUM MAGAZINIEREN VON SCHRAUBEN**
DEVICE FOR PROCESSING A BELT STRAP FOR STORING SCREWS
DISPOSITIF DE TRAITEMENT DE BANDES SOUPLES UTILISÉES POUR LE STOCKAGE DE VIS

(30) Priorität: 18.04.2007 DE 202007005605 U
(43) Veröffentlichungstag der Anmeldung: 30.12.2009
(73) Patentinhaber: SFS intec Holding AG, 9435 Heerbrugg (CH)
(72) Erfinder: GASSER, Daniel, CH-9444 Diepoldsau (CH); ZWICKY, Werner, CH-9442 Berneck (CH)
(86) Internationale Anmeldenummer: PCT/EP2008/003022
(87) Internationale Veröffentlichungsnummer: WO 2008/128687

(56) Entgegenhaltungen:
- DE-U1- 8 817 271
- US-A1- 2004 042 875

## Beschreibung

Die Erfindung betrifft eine Vorrichtung zum Verarbeiten von Gurtband zum Magazinieren von Schrauben, das einen flachen Gurt aufweist, der an seinen gegenüberliegenden Längsrändern jeweils so mit einem sich in Längsrichtung des Gurtbandes erstreckenden und von dem Gurt nach oben vorstehenden Flansch versehen ist, dass das Gurtband einen flach U-förmigen Querschnitt aufweist, wobei die Vorrichtung eine Führungseinrichtung hat zum Führen und Halten von zu verarbeitendem Gurtband, damit die Schrauben durch einen Schrauber aus dem Gurtband herausdrückbar sind, wobei die Führungseinrichtung zwei Führungsschlitze hat zum Aufnehmen von zu verarbeitendem Gurtband wenigstens im Bereich von dessen Flanschen, wobei die Führungsschlitze jeweils im Querschnitt L-förmig sind und jeweils eine Auflagefläche für die Unterseite des Gurtes von zu verarbeitendem Gurtband und jeweils eine Führungsrippe zum Übergreifen des Flansches haben, wobei der Abstand jeder Führungsrippe von der Auflagefläche einen Wert hat, der größer ist als die Gurtdicke von zu verarbeitendem Gurtband, und wobei zu verarbeitendes Gurtband eine Eckdiagonale hat, welche sich in dem U-förmigen Querschnitt zwischen Punkten erstreckt, an denen sich eine Innenseite eines Flansches mit einer Oberseite des Gurtes bzw. eine der Außenseiten von zu verarbeitendem Gurtband mit der Unterseite des Gurtes schneidet.

Gurtbänder und Vorrichtungen zu deren Verarbeitung sind für diverse Spezialanwendungen bekannt. Dabei werden die Flansche am Gurtband in den unterschiedlichsten Formen, die meist symmetrisch zum Gurt ausgebildet sind, eingesetzt. Die Symmetrie wird auch weitgehend zwischen der Ober- und der Unterseite des Gurtes eingehalten, insbesondere zu dem Zweck, die Stabilität des Gurtbandes zu erhöhen, um eine geringe Verformung respektive Durchbiegung beim Herausdrücken der Befestiger aus dem Gurtband zu erreichen. Eine zu große Durchbiegung bringt erfahrungsgemäß eine höhere Störanfälligkeit bei der Anwendung mit sich. Aus dem Dokument US 5 813 114 A ist ein Gurtband bekannt, bei dem die Flansche hauptsächlich zur Stabilisierung und Verstärkung des Gurtbandes dienen und wenig zur Führung beitragen. Bei einer aus diesem Dokument bekannten Vorrichtung wird das Gurtband mit der Unterseite des Gurtes auf den oberen Rand eines zylindrischen Zuführkanals aufgesetzt, in den ein aus dem Gurtband herausgedrückte Befestiger hineinfallen kann. Der Fachmann ist bis heute der Auffassung, dass beim Setzen der Schrauben die Flansche in der Richtung des Kraftflusses in einer Führungseinrichtung geführt und eingespannt sein sollen, damit die Durchbiegung des Gurtbandes gering bleibt. Nachteilig ist dabei aber eine großflächige Berührung zwischen Gurtband und Führungseinrichtung, die die Vorrichtung störungsanfällig macht.

Eine Vorrichtung der eingangs genannten Art ist aus dem Dokument US 2004/042875 A1 bekannt. Bei dieser bekannten Vorrichtung ist ebenfalls eine großflächige Berührung zwischen Gurtband und Führungseinrichtung vorhanden. Diese großflächige Berührung wird für notwendig erachtet, weil in dieser bekannten Vorrichtung die Schrauben von der Unterseite des Gurtbandes her durch einen Schrauber aus dem Gurtband herausdrückbar sind. Zu diesem Zweck sind bei dieser bekannten Vorrichtung die Führungsrippen bis in die Nähe des Schaftes der von unten aus dem Gurtband herauszudrückenden Schraube vorgezogen. Das erscheint auch schon deshalb erforderlich, weil bei dieser bekannten Vorrichtung die Führungsschlitze für das Gurtband ebenso wie die Schlitze zwischen den Führungsrippen und den Auflageflächen für die Unterseite des Gurtbandes eine Breite haben, die gleich der Länge einer Eckdiagonale von zu verarbeitendem Gurtband ist, die eingangs bereits definiert worden ist. Da ferner bei dieser bekannten Vorrichtung die unmittelbar an der Unterseite des Schraubenkopfes anliegenden Teile des Gurtbandes bei dem Herausdrücken der Schraube von unten her aus dem Gurtband nach oben nachgeben müssen, um den Schraubenkopf freizugeben, ist auch der Abstand zwischen den Führungsrippen nur wenig größer als der Schraubenkopf. Wenn bei dieser bekannten Vorrichtung Schrauben mit größerem Kopf zu verarbeiten sind, dürfte es erforderlich sein, zuvor die Führungseinrichtung gegen eine andere Führungseinrichtung auszutauschen, bei der der Abstand zwischen den Führungsrippen entsprechend größer ist.

Aufgabe der Erfindung ist es, eine Vorrichtung zum Verarbeiten von Gurtband zum Magazinieren von Schrauben so zu gestalten, dass eine einfachere und nicht störungsanfällige Führungseinrichtung in der Vorrichtung einsetzbar ist und dadurch eine höhere Zuverlässigkeit der Vorrichtung erreicht wird.

Mit der Vorrichtung nach der Erfindung wird die Aufgabe dadurch gelöst, dass der Querschnitt von zu verarbeitendem Gurtband einen Umfang aufweist, der gegenüber dem des flanschlosen Gurtes maximal ein Verhältnis von 11:10 hat, dass die Schrauben von der Oberseite des Gurtbandes her durch einen Schrauber aus dem Gurtband herausdrückbar sind und dass der Wert des Abstandes jeder Führungsrippe von der Auflagefläche kleiner ist als die Länge der Eckdiagonale des Gurtbandes.

Der Querschnitt von mit der Vorrichtung nach der Erfindung zu verarbeitendem Gurtband weist einen Umfang auf, der gegenüber dem des flanschlosen Gurtes maximal ein Verhältnis von 11:10 hat. Da die Schrauben erfindungsgemäß von der Oberseite des Gurtbandes her durch einen Schrauber aus dem Gurtband herausdrückbar sind und weiter der Wert des Abstandes jeder Führungsrippe von der Auflagefläche kleiner ist als die Länge der Eckdiagonale des Gurtbandes, verhindert die Führungseinrichtung in der Vorrichtung nach der Erfindung, dass die Flansche des Gurtbandes bei dem Herausdrücken einer Schraube von unten her aus dem Gurtband die im Querschnitt L-förmigen Führungsschlitze verlassen können. Die Führungseinrichtung kann somit bei der Vorrichtung nach der Erfindung störungsfrei arbeiten. Der Gurt und das Gurtband unterscheiden sich im Umfang nur durch die Höhe der Flansche. Der Umfang ist also um den vierfachen Wert der vorstehenden Flanschhöhe, um die jeder Flansch die Dicke D des Gurtes überschreitet, verlängert. Diese Höhe H ist vorzugsweise so ausgelegt, dass sie maximal 2,5% vom Umfang des flanschlosen Gurtes beträgt. Die Form des Führungsschlitzes kann so an den Flansch angepasst werden, dass an der Innenseite des Flansches eine maximale Kontaktfläche entsteht. Dabei muss aber auch darauf geachtet werden, dass die Fertigungstoleranz des Gurtbandes nicht zu einem Blockieren des Gurtbandes im Führungsschlitz durch den Vorschub des Gurtbandes führen kann, wozu es bei zu großflächiger gegenseitiger Berührung kommen könnte. Versuche haben entgegen der bisherigen Meinung der Fachwelt gezeigt, dass eine Auflagelänge von weniger als 2% des zugrunde gelegten Basisumfanges des flanschlosen Gurtes genügt, um die normale Funktion des Gurtbandes mit der Führungseinrichtung der erfindungsgemäßen Vorrichtung zu gewährleisten. Wird das Gurtband extremen Belastungen ausgesetzt oder wird das Gurtband aus einem besonders weichen Kunststoffmaterial od. dgl. hergestellt, wird damit verhindert, dass die breiteste Stelle am Gurtband durch den Führungsschlitz herausgedrückt werden kann. Selbst wenn durch die hohen Kräfte das im Querschnitt U-förmige Gurtband zu einem beinahe flachen Gurt gestreckt werden könnte, kann diese breiteste Stelle am Gurtband ein Herausdrücken verhindern. Durch das minimale Dimensionieren der Eckdiagonale wird die Aufgabe mit einem Minimum an Gurtbandmaterial gelöst. Die vorstehende Flanschhöhe kann ebenfalls minimal ausgelegt werden. Diesbezüglich wird ein Optimum erreicht, wenn die Gurtdicke und die vorstehende Flanschhöhe zusammen in etwa der Summe von Eckdiagonale und Gurtdicke entsprechen. Damit liegt jeder Flansch mindestens auf der Länge der Gurtdicke an der Auflagefläche der Führungseinrichtung auf.

Vorteilhafte Ausgestaltungen der Erfindung bilden die Gegenstände der abhängigen Ansprüche.

Dadurch dass in einer Ausgestaltung der Vorrichtung nach der Erfindung der Abstand der Führungsrippe von der Auflagefläche für die Unterseite des Gurtes zu einer Breite des Flansches ein Verhältnis von 1: 1 aufweist, wird erreicht, dass auch bei sehr hohen Belastungen beim Herausdrücken der Schrauben aus dem Gurtband die Flansche in den Führungsschlitzen gehalten werden. Durch Armierungen im Übergang vom Gurt zu den Flanschen können die vorzugsweise rechtwinklig auf dem Gurt ausgebildeten Flansche so verstärkt werden, dass eine größere Verformung verhindert wird.

In einer weiteren Ausgestaltung der Vorrichtung nach der Erfindung berührt das Gurtband auf jeder Seite an maximal zwei Stellen die Führungseinrichtung. Wesentlich dabei ist, dass das Gurtband in der Belastungsrichtung mit einer Kontaktfläche an der Unterseite des Gurtes an der Führungseinrichtung abgestützt wird und damit die Verarbeitungskräfte, die durch das Herausdrücken der Schrauben beim Setzen entstehen, aufnehmen kann. Die zweite Kontaktfläche am Flansch dient dazu, dass sich das Gurtband im Querschnitt durch die Verarbeitungskräfte nicht wesentlich nach unten durchbiegen kann.

In einer weiteren Ausgestaltung der Vorrichtung nach der Erfindung steht das Gurtband außer an der Unterseite des Gurtes und an den beiden Innenseiten der Flansche mit weiteren Auflageflächen der Führungseinrichtung in Kontakt. Neben der Kontaktfläche an der Innenseite der Flansche reicht es aus, dass das Gurtband an der Unterseite des Gurtes mit der Führungseinrichtung in Kontakt ist. Weitere Kontaktflächen sind weder notwendig noch zweckmäßig, da ansonsten größere Reibungsstellen vorhanden wären. Die Positionierung des Gurtbandes in der Führungseinrichtung wird genügend genau durch die Flansche auf dem Gurt sichergestellt, so dass die Führungseinrichtung an den Stellen, an denen sie keinen Kontakt mit dem Gurtband hat, viel Spiel aufweisen darf.

Weitere Vorteile und Ausgestaltungen der Erfindung ergeben sich aus der Beschreibung und den beiliegenden Zeichnungen.

Ausführungsbeispiele der Erfindung werden im Folgenden unter Bezugnahme auf die Zeichnungen näher erläutert. Es zeigt:
- Fig. 1: im Querschnitt ein Gurtband zum Magazinieren von Schrauben,
- Fig. 2: im Querschnitt eine Vorrichtung zum Verarbeiten von Gurtband, mit einer schmalen Führungseinrichtung für das Gurtband, und
- Fig. 3: im Querschnitt eine Vorrichtung zum Verarbeiten des Gurtbandes nach Fig. 1, mit einer Führungseinrichtung für das Gurtband.

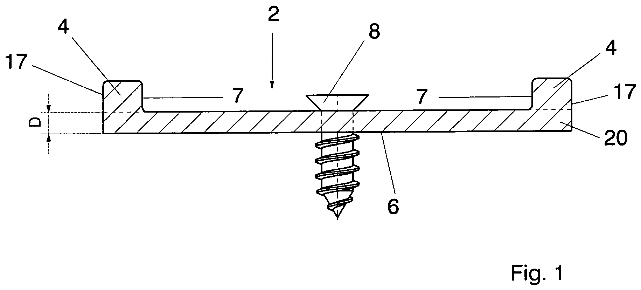

An einem in Fig. 1 im Querschnitt dargestellten Gurtband 2 zum Magazinieren von Schrauben 8 stehen Flansche 4 über die Oberseite 9 eines flachen Gurtes 20 vor. Auf der Oberseite 9 sind die Schrauben 8 mit ihrem Schaft in den Gurt 20 des Gurtbandes 2 einbringbar. Durch die Anordnung der Flansche 4 auf der gleichen Gurtbandseite wie die Köpfe der Schrauben 8 wird erreicht, dass die Unterseite 6 des Gurtes 20 während der Konfektion des Gurtbandes 2 mit den Schrauben 8 großflächig abgestützt werden kann.

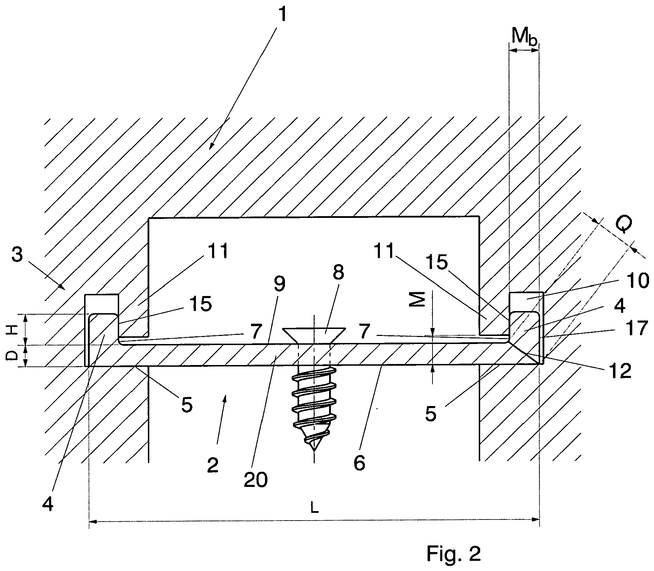

Eine Ausführungsvariante einer Vorrichtung 1 zum Verarbeiten von Gurtband ist in Fig. 2 dargestellt. Eine Führungseinrichtung 3 hat Führungsschlitze 10, die jeweils im Querschnitt L-förmig sind und jeweils eine Auflagefläche 5 für die Unterseite 6 des Gurtes 20 des Gurtbandes 2 und jeweils eine den Flansch 4 übergreifende Führungsrippe 11 haben, deren Abstand M von der Auflagefläche 5 einen Wert hat, der zwischen der Gurtdicke D und der Länge Q einer Eckdiagonale 12 des Gurtbandes 2 liegt, welche sich in dem U-förmigen Querschnitt zwischen den Punkten erstreckt, an denen sich die Innenseite 7 eines Flansches 4 mit der Oberseite 9 des Gurtes 20 bzw. eine der Außenseiten des Gurtbandes 2 mit der Unterseite 6 des Gurtes 20 schneidet.

Der Querschnitt des Gurtbandes 2 weist einen Umfang auf, der gegenüber dem des flanschlosen Gurtes 20 maximal ein Verhältnis von 11:10 hat. Die hier beschriebene Kombination aus Führungseinrichtung 3 und Gurtband 2 mit Flanschen 4 lässt es zu, dass das Gurtband 2 an der Innenseite 7 der Flansche 4 mit einer minimalen Fläche eine weitere Auflagefläche 15 an den Führungsrippen 11 berührt. Typischerweise ist im dargestellten Querschnitt in Fig. 2 betrachtet das 4-fache der Höhe H höchstens 10 Prozent von der Summe des 2-fachen der Gurtdicke D und des 2-fachen der Gurtband- oder Gurtbreite L, was dem Umfang des flanschlosen, flachen Gurtes 20 entspricht.

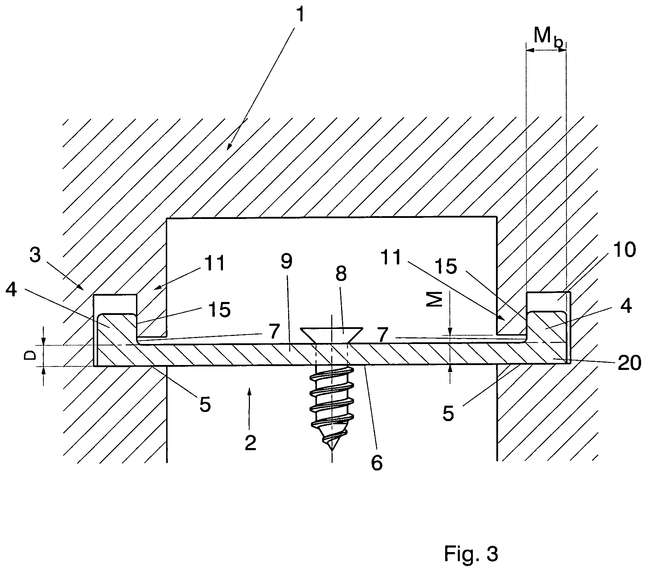

In der bevorzugten Ausgestaltung nach Fig. 3 weist der Abstand M der Führungsrippe von der Auflagefläche 5 für die Unterseite des Gurtes 20 zu der Flanschbreite Mb ein Verhältnis von 1: 1 auf. Dieses minimale Maß der Flanschbreite Mb verhindert ein Herausziehen des Flansches 4 aus dem Führungsschlitz 10, da selbst im ungünstigsten Fall, wie durch das Herunterbiegen des Flansches 4 in die Verlängerung des flachen Gurtes 20 eine neue Flanschhöhe bleibt, die dem Abstand M entspricht.

In einer Ausgestaltung der Vorrichtung 1 zum Verarbeiten von Gurtband 2 berührt das Gurtband 2 auf jeder Seite an maximal zwei Stellen die Führungseinrichtung 3. Um ein Herausziehen zu verhindern, muss das Gurtband 2 auf jeder Seite mit der Führungseinrichtung 3 an mindestens zwei Stellen in Kontakt sein, nämlich an den Auflageflächen 5 und an den weiteren Auflageflächen 15. Die Länge der Führungseinrichtung 3 hat einen weiteren Einfluss auf das Auszugsverhalten des Gurtbandes 2. Dazu muss beachtet werden, dass je nach Ausführung des Gurtbandes 2 auch die Möglichkeit besteht, dass an den Flanschen 4 für Vorschubzwecke Unterbrüche in Form von Kerben und dgl. angebracht sind. Die Führungseinrichtung 3 sollte in diesem Falle so lang dimensioniert werden, dass die Kerben maximal ein Viertel der Führungslänge ausmachen.

In der bevorzugten Ausgestaltung der Vorrichtung 1 zum Verarbeiten von Gurtband 2 steht das Gurtband 2 an der Unterseite 6 des Gurtes 20 und an den beiden Innenseiten 7 der Flansche 4 mit der Führungseinrichtung 3 in Kontakt. Üblicherweise berührt das Gurtband 2 auf jeder Längsseite die Führungseinrichtung 3 an den beiden erwähnten Stellen im Flanschbereich an den Auflageflächen 5 und an den weiteren Auflageflächen 15. Durch die Belastung beim Setzen der Schrauben 8 wird das Gurtband 2 an der Unterseite 6 des Gurtes 20 stärker gegen die Auflageflächen 5 gedrückt und gleichzeitig an der Innenseite 7 der Flansche 4 ebenfalls mit erhöhter Kraft gegen die weiteren Auflageflächen 15 an der Führungseinrichtung 3 gedrückt. Die Lage des Gurtbandes 2 wird so gleichzeitig während der höchsten Belastung auch innerhalb der Führungseinrichtung 3 gehalten und fixiert. Die Schrauben 8 können entsprechend exakter positioniert und gesetzt werden.

### Bezugszeichen

- 1: Vorrichtung zum Verarbeiten von Gurtband
- 2: Gurtband
- 3: Führungseinrichtung
- 4: Flansche
- 5: Auflageflächen
- 6: Unterseite
- 7: Innenseiten
- 8: Schrauben
- 9: Oberseite
- 10: Führungsschlitze
- 11: Führungsrippen
- 12: Eckdiagonalen
- 15: weitere Auflageflächen
- 17: Außenseiten
- 20: Gurt

- M: Abstand zwischen Führungsrippe und Auflagefläche
- Mb: Flanschbreite
- Q: Länge der Eckdiagonale
- D: Gurtdicke
- H: über den Gurt vorstehende Flanschhöhe
- L: Gurtbandbreite = Gurtbreite

## Patentansprüche

1. Vorrichtung zum Verarbeiten von Gurtband (2) zum Magazinieren von Schrauben (8), das einen flachen Gurt (20) aufweist, der an seinen gegenüberliegenden Längsrändern jeweils so mit einem sich in Längsrichtung des Gurtes (20) erstreckenden und von dem Gurt (20) nach oben vorstehenden Flansch (4) versehen ist, dass das Gurtband (2) einen flach U-förmigen Querschnitt aufweist,
wobei die Vorrichtung (1) eine Führungseinrichtung (3) hat zum Führen und Halten von zu verarbeitendem Gurtband (2), damit die Schrauben (8) durch einen Schrauber aus dem Gurtband (2) herausdrückbar sind,
wobei die Führungseinrichtung (3) zwei Führungsschlitze (10) hat zum Aufnehmen von zu verarbeitendem Gurtband (2) wenigstens im Bereich von dessen Flanschen (4),
wobei die Führungsschlitze (10) jeweils im Querschnitt L-förmig sind und jeweils eine Auflagefläche (5) für die Unterseite (6) des Gurtes (20) von zu verarbeitendem Gurtband (2) und jeweils eine Führungsrippe (11) zum Übergreifen des Flansches (4) haben,
wobei der Abstand (M) jeder Führungsrippe (11) von der Auflagefläche (5) einen Wert hat, der größer ist als die Gurtdicke (D) von zu verarbeitendem Gurtband (2), und
wobei zu verarbeitendes Gurtband (2) eine Eckdiagonale (12) hat, welche sich in dem U-förmigen Querschnitt zwischen Punkten erstreckt, an denen sich eine Innenseite (7) eines Flansches (4) mit einer Oberseite (9) des Gurtes (20) bzw.
eine der Außenseiten (17) von zu verarbeitendem Gurtband (2) mit der Unterseite (6) des Gurtes (2) schneidet,
**dadurch gekennzeichnet, dass** der Querschnitt von zu verarbeitendem Gurtband (2) einen Umfang aufweist, der gegenüber dem des flanschlosen Gurtes maximal ein Verhältnis von 11:10 hat,
dass die Schrauben (8) von der Oberseite (9) des Gurtbandes (2) her durch einen Schrauber aus dem Gurtband (2) herausdrückbar sind und
dass der Wert des Abstandes (M) jeder Führungsrippe (11) von der Auflagefläche (5) kleiner ist als die Länge (Q) der Eckdiagonale (12) des Gurtbandes (2).

2. Vorrichtung nach Anspruch 1, **dadurch gekennzeichnet, dass** der Abstand (M) der Führungsrippe (11) von der Auflagefläche (5) für die Unterseite des Gurtes (20) zu einer Breite (Mb) des Flansches (4) ein Verhältnis von 1: 1 aufweist.

3. Vorrichtung nach Anspruch 1 oder 2, **dadurch gekennzeichnet, dass** das Gurtband (2) auf jeder Seite an maximal zwei Stellen die Führungseinrichtung (3) berührt.

4. Vorrichtung nach Anspruch 3, **dadurch gekennzeichnet, dass** das Gurtband (2) außer an der Unterseite (6) des Gurtes (20) an den beiden Innenseiten (7) der Flansche (4) mit weiteren Auflageflächen (15) der Führungseinrichtung (3) in Kontakt steht.

## Claims

1. A device for processing a belt strap (2) for storing screws (8), said belt strap comprising a flat belt (20) which at its opposing longitudinal edges in each case is provided with a flange (4) extending in the longitudinal direction of the belt (20) and protruding upwardly from the belt (20), such that the belt strap (2) has a flat U-shaped cross section,
wherein the device (1) comprises a guide apparatus (3) for guiding and holding the belt strap (2) to be processed, so that the screws (8) are able to be pressed out from the belt strap (2) by a screwdriver,
wherein the guide apparatus (3) has two guide slots (10) for receiving the belt strap (2) to be processed at least in the region of the flanges (4) thereof,
wherein the guide slots (10) in each case are L-shaped in cross section and in each case have a bearing surface (5) for the lower face (6) of the belt (20) of the belt strap (2) to be processed and in each case have a guide rib (11) for encompassing the flange (4),
wherein the distance (M) of each guide rib (11) from the bearing surface (5) has a value which is greater than the belt thickness (D) of the belt strap (2) to be processed and
wherein the belt strap (2) to be processed has a corner diagonal (12) which extends in the U-shaped cross section between points at which an inner face (7) of a flange (4) intersects with an upper face (9) of the belt (20) and/or one of the outer faces (17) of the belt strap (2) to be processed intersects with the lower face (6) of the belt (2),
**characterised in that** the cross section of the belt strap (2) to be processed has a periphery which has a maximum ratio of 11:10 relative to that of the non-flanged belt,
**in that** the screws (8) are able to be pressed out from the belt strap (2) by a screwdriver from the upper face (9) of the belt strap (2) and
**in that** the value of the distance (M) of each guide rib (11) from the bearing surface (5) is less than the length (Q) of the corner diagonal (12) of the belt strap (2).

2. The device according to Claim 1, **characterised in that** the distance (M) of the guide rib (11) from the bearing surface (5) for the lower face of the belt (20) is at a ratio of 1:1 relative to a width (Mb) of the flange (4).

3. The device according to Claim 1 or 2, **characterised in that** the belt strap (2) on each side is in contact with the guide apparatus (3) at a maximum of two points.

4. The device according to claim 3, **characterised in that** the belt strap (2) is in contact with further bearing surfaces (15) of the guide apparatus (3), besides the lower face (6) of the belt (20) on the two inner faces (7) of the flanges (4).

## Revendications

1. Dispositif de traitement des bandes souples (2) utilisées pour le stockage des vis (8), qui comporte une bande plate (20), qui est dotée respectivement sur ses bords longitudinaux opposés d'une bride (4) s'étendant dans la direction longitudinale de la bande (20) et ressortant de la bande (20) vers le haut de sorte que la bande souple (2) présente une section en forme de U à plat,
le dispositif (1) possédant un dispositif de guidage (3) pour guider et maintenir la bande souple à traiter (2) afin que les vis (8) puissent être extraites de la bande souple (2) par un tournevis,
le dispositif de guidage (3) possédant deux fentes de guidage (10) pour recevoir la bande souple à traiter (2) au moins dans la zone des brides (4) de celui-ci,
les fentes de guidage (10) étant respectivement en forme de L en section et possédant respectivement une surface d'appui (5) pour la face inférieure (6) de la bande (20) de la bande souple à traiter (2) et respectivement une nervure de guidage (11) pour venir en prise sur la bride (4),
la distance (M) de chaque nervure de guidage (11) de la surface d'appui (5) ayant une valeur qui est plus grande que l'épaisseur de bande (D) de la bande souple à traiter (2), et
la bande souple à traiter (2) ayant une diagonale d'angle (12), qui s'étend dans la section en forme de U entre des points auxquels se croise une face intérieure (7) d'une bride (4) avec une face supérieure (9) de la bande (20) ou une des faces extérieures (17) de la bande souple à traiter (2) avec la face inférieure (6) de la bande (2),
**caractérisé en ce que**, la section de la bande souple à traiter (2) comprend une périphérie qui a au maximum un rapport de 11 :10 par rapport à la bande sans bride,
**en ce que** les vis (8) peuvent être extraites de la bande souple (2) de la face supérieure (9) de la bande souple (2) par un tournevis et
**en ce que** la valeur de la distance (M) de chaque nervure de guidage (11) de la surface d'appui (5) est plus petite que la longueur (Q) de la diagonale d'angle (12) de la bande souple (2).

2. Dispositif selon la revendication 1, **caractérisé en ce que** la distance (M) de la nervure de guidage (11) de la surface d'appui (5) pour la face inférieure de la bande (20) jusqu'à une largeur (Mb) de la bride (4) comporte un rapport de 1:1.

3. Dispositif selon la revendication 1 ou 2, **caractérisé en ce que** la bande souple (2) touche le dispositif de guidage (3) sur chaque côté au maximum en deux endroits.

4. Dispositif selon la revendication 3, **caractérisé en ce que** la bande souple (2) est en contact, outre la face inférieure (6) de la bande (20) sur les deux côtés intérieurs (7) de la bride (4) avec les autres surfaces d'appui (15) du dispositif de guidage (3).
